# EUROPÄISCHE PATENTSCHRIFT

(11) **EP 2 570 980 B1**
(45) Veröffentlichungstag und Bekanntmachung des Hinweises auf die Patenterteilung: **02.04.2014**
(21) Anmeldenummer: 11181435.6
(22) Anmeldetag: 15.09.2011
(51) Int. Cl.: G06Q 30/00

(54) **Verfahren zur Konfiguration und/oder Funktionsfähigkeitsprüfung einer ein Getriebe umfassenden Maschine und Steuerungsprogramm**
Method for configuring and/or testing the functionality of a machine comprising a transmission gear and control program
Procédé de configuration et/ou de contrôle de la capacité fonctionnelle d'une machine comprenant un engrenage et programme de commande

(43) Veröffentlichungstag der Anmeldung: 20.03.2013
(73) Patentinhaber: Siemens Aktiengesellschaft, 80333 München (DE)
(72) Erfinder: Boeing, Georg, 72108 Rottenburg (DE); Tschepa, Ulrike, 72108 Rottenburg (DE)

(56) Entgegenhaltungen:
- US-A- 4 964 043
- US-A1- 2004 096 270
- US-B1- 6 785 805

## Beschreibung

Aus DE 10 2004 030 032 A1 ist ein Verfahren zum Konfigurieren und Parametrieren einer automatisierbaren Maschine bekannt, bei dem verschiedene Technologieobjekte als Modellkomponenten grafisch dargestellt werden. Ein mechatronischer Signalfluss zwischen Technologieobjekten wird dabei an einer graphischen Benutzerschnittstelle mittels Verbindungen festgelegt, die Eingänge und Ausgänge von Technologieobjekten miteinander verknüpfen.

In US 4,964,043 ist ein System zur Visualisierung, Identifizierung und Bereitstellung von Getriebekonfigurationen beschrieben. Das System umfasst eine Rechnereinrichtung und eine dieser zugeordneten Anzeigeeinrichtung, an der eine ausgewählte Getriebekonfiguration visualisiert wird. Die ausgewählte Getriebekonfiguration wird dabei durch Deskriptoren bzw. Identifikatoren ergänzt in unterschiedlichen Orientierungen bzw. Ausrichtungen dargestellt. Durch die Rechnereinrichtung werden an der Anzeigeeinrichtung darzustellende Informationen anhand von Identifikatoren aus einer Datenbank abgefragt und an der Anzeigeeinrichtung bereitgestellt. Die Anzeigeeinrichtung und die Rechnereinrichtung sind räumlich von einander entfernt angeordnet und durch ein Kommunikationsnetz miteinander verbunden.

Aus US 5,367,627 ist Datenverarbeitungssystem bekannt, in dessen Speichereinheit Text- und Grafikinformationen zu durch das Datenverarbeitungssystem verwalteten Produkten gespeichert sind. Diese Text- und Grafikinformationen umfassen beispielsweise Produktspezifikationen, -eigenschaften oder -vorteile. Dem Datenverarbeitungssystem ist eine Anzeigeeinheit zugeordnet, an der Teile der Text- und Grafikinformationen zu Informations- und Auskunftszwecken selektiv dargestellt werden. Hierzu ist eine menugestützte Auswahlfunktion vorgesehen, die anhand von Produktspezifikationen eine Navigation durch die Text- und Grafikinformationen ermöglicht.

US 2004 0 096 270 A1 beschreibt eine Adaptervorrichtung zur Adaption eines Antriebs eines Schneckengetriebes, um eine Ausgangswelle zu drehen. Die Adaptervorrichtung weist eine Hülse mit einem Innendurchmesser auf, der geringfügig größer als ein Außendurchmesser der Abtriebswelle ist. Die Hülse besitzt einen Außendurchmesser, der geringfügig kleiner als ein Innendurchmesser des Antriebs des Schneckengetriebes ist. Eine längliche Feder wirkt mit einem Längsschlitz, begrenzt von der Ausgangswelle, und einem ausgerichteten Kanal, begrenzt durch die Hülse, und einer ausgerichteten Nut, begrenzt durch den Antrieb des Schneckengetriebes, zusammen. Die Hülse ist zwischen der Abtriebswelle und dem Antrieb der Schnecke angeordnet, wobei die Hülse, die Ausgangswelle und der Antrieb des Schneckengetriebes koaxial relativ zueinander angeordnet sind. Die Anordnung ist derart, dass, wenn der Antrieb der Schnecke dreht, die Feder mit der ausgerichteten Nut des Antriebs der Schnecke, dem Kanal der Hülse und dem Längsschlitz der Ausgangswelle zum Drehen der Ausgangswelle zusammenwirkt.

US 6 785 805 B1 beschreibt netzwerk-basierte Methoden und Systeme für die Konfiguration und den Aufbau von Systemen und die Systemintegration für die Test-, Automatisierungs- und Messtechnik-Umgebung. Die Verfahren umfassen Internet- oder Intranet-basierten Anwendungen, die ein System oder ein System-Integrations-Projekt in Reaktion auf die Auswahl von System-Eigenschaften, Systemkomponenten und / oder SystemKonfigurationen durch einen Netznutzer konfigurieren und angeben. Die Verfahren können als Teil einer Build-to-Order-Internet-Anwendung eingesetzt werden.

Getriebemotoren weisen vielfach Gehäuseöffnungen oder -bohrungen auf, die je nach Baulage eine unterschiedliche Funktion haben, beispielsweise für Ölablass, Entlüftung oder Ölstandskontrolle. Informationen über die jeweilige Funktion sind Katalogen und Bedienungsanleitungen zu entnehmen. Ein derartiges Heraussuchen stellt jedoch eine mögliche Fehlerquelle dar, die zu falschen Funktionszuordnungen führen kann.

Der vorliegenden Erfindung liegt die Aufgabe zugrunde, ein Verfahren zur Konfiguration bzw. Funktionsfähigkeitsprüfung einer ein Getriebe umfassenden Maschine, das eine Reduktion von Fehlerquellen durch falsche Funktionszuordnungen ermöglicht, sowie eine technische Implementierung des Verfahrens anzugeben.

Diese Aufgabe wird erfindungsgemäß durch ein Verfahren mit den in Anspruch 1 angegebenen Merkmalen sowie durch ein Steuerungsprogramm mit den in Anspruch 7 angegebenen Merkmalen gelöst. Vorteilhafte Weiterbildungen der vorliegenden Erfindung sind in den abhängigen Ansprüchen angegeben.

Zur Konfiguration bzw. Funktionsfähigkeitsprüfung einer ein Getriebe umfassenden Maschine wird erfindungsgemäß in einer Steuerungsdatei eine dreidimensionale Abbildung eines in eine Maschine einzubauenden Getriebes gespeichert. Dabei sind der Abbildung in der Steuerungsdatei Metadaten zugeordnet, die einbaulageabhängige Funktionen von einem Schmierstoffversorgungssystem des Getriebes zugeordneten Gehäusebohrungen oder -öffnungen kennzeichnen. Die einbaulageabhängigen Funktionen der dem Schmierstoffversorgungssystem des Getriebes zugeordneten Gehäusebohrungen oder -öffnungen können beispielsweise Entlüftung, Schmierstoffablass und Schmierstoffstandskontrolle sein. Die Steuerungsdatei wird in eine rechnerbasierte Konfigurations- bzw. Funktionsüberprüfungseinheit geladen, der eine graphische Benutzerschnittstelle zugeordnet ist. Darüber hinaus wird ein von der geladenen Steuerungsdatei umfasstes Getriebe an der graphischen Benutzerschnittstelle hinsichtlich seiner durch seine Position bzw. Orientierung vorgegebenen Einbaulage konfigurierbar dargestellt. Auf eine Benutzereingabe einer ausgewählten Einbaulage wird das von der Steuerungsdatei umfasste Getriebe an der graphischen Benutzerschnittstelle mit Piktogrammen an den Gehäusebohrungen oder -öffnungen für einen Abgleich mit zulässigen Anschlussbereichen der Maschine dargestellt. Dabei visualisieren die Piktogramme jeweils eine der ausgewählten Einbaulage zugeordnete Funktion der Gehäusebohrungen oder -öffnungen. Auf diese Weise können falsche Funktionszuordnungen ausgeschlossen werden.

Entsprechend einer bevorzugten Ausgestaltung der vorliegenden Erfindung werden die einbaulageabhängige Funktionen visualisierenden Piktogramme an der graphischen Benutzerschnittstelle auf Verschlussschrauben der Gehäusebohrungen oder -öffnungen angeordnet dargestellt. Dies ermöglicht eine besonders schnelle und sichere Funktionszuordnung. Entsprechend einer alternativen Ausgestaltung der vorliegenden Erfindung können einbaulageabhängige Funktionen visualisierende Piktogramme an auch neben Verschlussschrauben angeordnet dargestellt werden.

Die dreidimensionale Abbildung des Getriebes ist vorzugsweise als Objektdaten in der Steuerungsdatei gespeichert. Außerdem wird die Steuerungsdatei entsprechend einer Weiterbildung der vorliegenden Erfindung gemeinsam mit eine Konfiguration der Maschine darstellenden Objektdaten in die Konfigurations- bzw. Funktionsüberprüfungseinheit geladen und an der graphischen Benutzerschnittstelle dargestellt. Auf diese Weise können Positionen von Gehäusebohrungen oder -öffnungen besonders zuverlässig und einfach mit zulässigen Anschlussbereichen der Maschine abgeglichen werden.

Darüber hinaus kann die Konfigurations- bzw. Funktionsüberprüfungseinheit beispielsweise einer Server-Rechnereinheit zugeordnet sein, während die graphische Benutzerschnittstelle einer Client-Rechnereinheit zugeordnet sein kann. In diesem Fall sind Server-Rechnereinheit und Client-Rechnereinheit über ein Kommunikationsnetz miteinander verbunden. Dies ermöglicht eine effiziente und konsistente Bereitstellung von Informationen über Funktionen von Gehäusebohrungen oder -öffnungen an einem Getriebe oder Getriebemotor.

Die vorliegende Erfindung wird nachfolgend an einem Ausführungsbeispiel anhand der Zeichnung näher erläutert. Es zeigt
- Figur 1: ein Ablaufdiagramm zur Konfiguration bzw. Funktionsfähigkeitsprüfung einer ein Getriebe umfassenden Maschine,
- Figur 2: ein beispielhaftes System zur Durchführung des in Figur 1 veranschaulichten Verfahrens,
- Figur 3: eine Seitenansicht eines Getriebes in einer ersten Einbaulage an einer graphischer Benutzerschnittstelle des in Figur 2 dargestellten Systems,
- Figur 4: eine an der graphischer Benutzerschnittstelle dargestellte Draufsicht des Getriebes gemäß Figur 3 in der ersten Einbaulage,
- Figur 5: eine an der graphischer Benutzerschnittstelle dargestellte Untersicht des Getriebes in einer zweiten Einbaulage,
- Figur 6: eine an der graphischer Benutzerschnittstelle dargestellte Seitenansicht des Getriebes gemäß Figur 5 in der zweiten Einbaulage,
- Figur 7: eine Übersicht über insgesamt mögliche 6 Einbaulagen eines Getriebemotors.

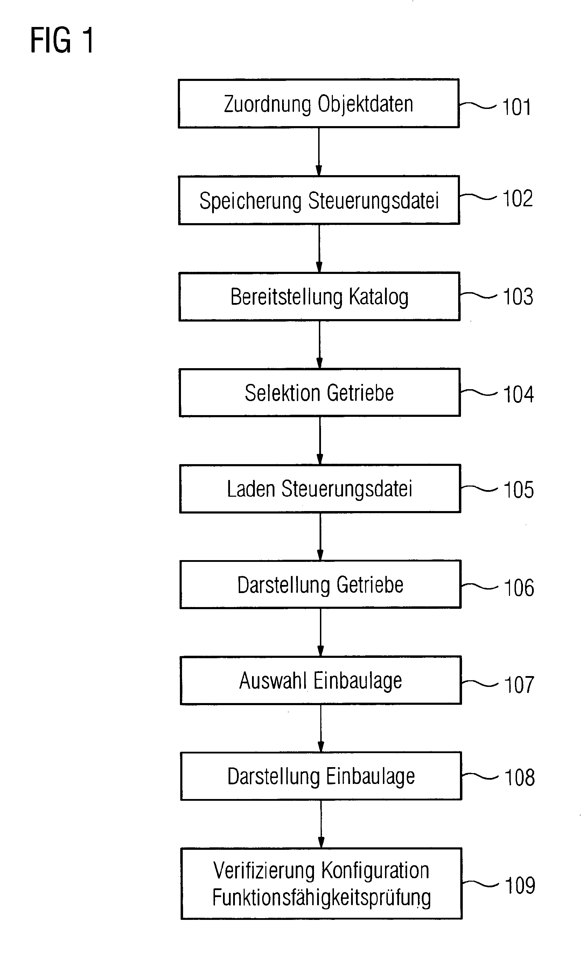

Entsprechend dem in Figur 1 dargestellten Ablaufdiagramm zur Konfiguration bzw. Funktionsfähigkeitsprüfung einer ein Getriebe umfassenden Maschine werden zunächst Objektdaten, die eine dreidimensionale Abbildung des Getriebes wiedergeben, zu Metadaten zugeordnet (Schritt 101), die einbaulageabhängige Funktionen von einem Schmierstoffversorgungssystem des Getriebes zugeordneten Gehäusebohrungen oder -öffnungen kennzeichnen. Die einbaulageabhängigen Funktionen der dem Schmierstoffversorgungssystem des Getriebes zugeordneten Gehäusebohrungen oder -öffnungen sind im vorliegenden Ausführungsbeispiel Entlüftung, Schmierstoffablass und Schmierstoffstandskontrolle. Nach Zuordnung von Metadaten und Objektdaten werden diese entsprechend Schritt 102 in einer Steuerungsdatei gespeichert, die eine Grundlage für eine Bereitstellung eines Katalogs bildet (Schritt 103), der eine Vielzahl von Getriebetypen oder -baureihen umfasst. Ein Beispiel für einen solchen Katalog ist das das internetbasierte Konstruktionskatalogsystem eKat, das zum Erstellen, Speichern und Darstellen von Konstruktionskatalogen dient. Konstruktionskataloge sind unter methodischen Gesichtspunkten erstellte Wissensspeicher, die innerhalb eines gewissen Rahmens systematisch gegliedert sind und einen gezielten Zugriff auf ihren Inhalt erlauben. Des Weiteren dienen Konstruktionskataloge zur Lösungsanregung oder -übernahme durch systematische Zuordnung bekannter Lösungsmerkmalen zu Bedingungen bestimmter Aufgabenstellung. In Konstruktionskatalogen sind beispielsweise Informationen zu physikalischen Effekten, Wirkprinzipien, prinzipiellen Lösungen für komplexe Aufgabenstellungen, Maschinenelementen, Normteilen oder Werkstoffen gespeichert.

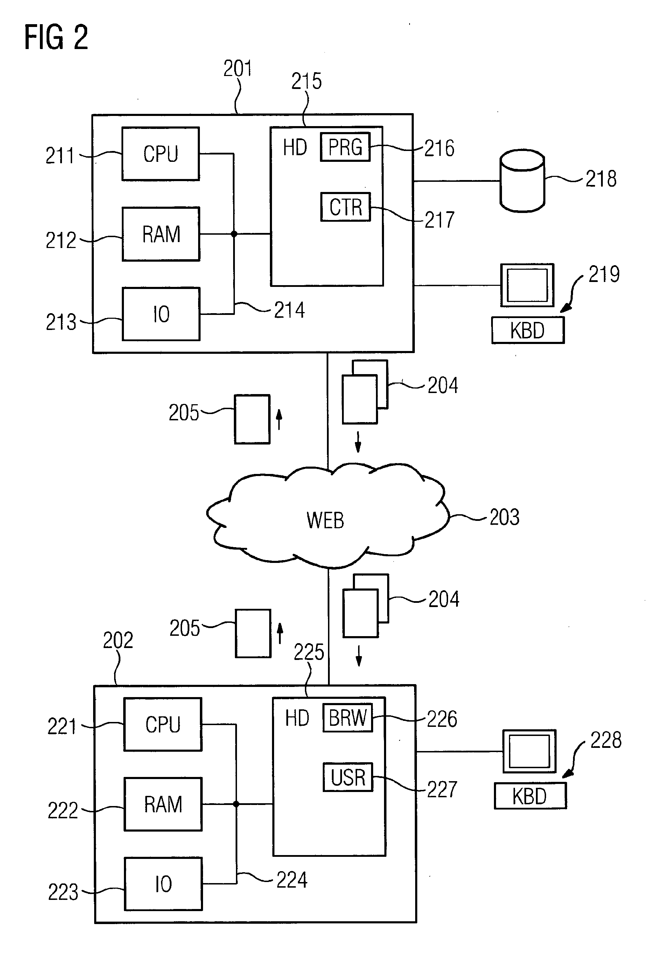

Der Katalog wird im vorliegenden Ausführungsbeispiel an einer in Figur 2 dargestellten graphischen Benutzerschnittstelle 228 einer Client-Rechnereinheit 202 durch eine Server-Rechnereinheit 201 zur Selektion eines in eine Maschine einzubauenden Getriebes entsprechend Schritt 104 bereitgestellt. Grundsätzlich kann der Katalog in einer Einzelplatz-Variante auch an einer graphischen Benutzerschnittstelle 219 der Server-Rechnereinheit 201 bereitgestellt werden.

Server-Rechnereinheit 201 und Client-Rechnereinheit 202 sind über ein Kommunikationsnetz 203, beispielsweise das Internet, miteinander verbunden. Nach Auswahl eines Getriebes wird eine diesem zugeordnete Steuerungsdatei 217 in die Server-Rechnereinheit 201 als Konfigurations- bzw. Funktionsüberprüfungseinheit geladen (Schritt 105). Das von der geladenen Steuerungsdatei 217 umfasste Getriebe wird dann entsprechend Schritt 106 an der graphischen Benutzerschnittstelle 228 der Client-Rechnereinheit 202 hinsichtlich seiner durch seine Position bzw. Orientierung vorgegebenen Einbaulage konfigurierbar dargestellt. Auf eine Auswahl einer gewünschten Einbaulage entsprechend Schritt 107 wird das von der Steuerungsdatei 217 umfasste Getriebe an der graphischen Benutzerschnittstelle 228 mit Piktogrammen an den Gehäusebohrungen oder -öffnungen dargestellt (Schritt 108). Die Piktogramme 2-4 an der graphischen Benutzerschnittstelle werden im vorliegenden Ausführungsbeispiel auf Verschlussschrauben der Gehäusebohrungen oder -öffnungen angeordnet dargestellt. Alternativ zu einer Darstellung auf Verschlussschrauben können die Piktogramme 2-4 auch in der Nähe von Verschlussschrauben dargestellt werden. Entsprechend Schritt 109 des in Figur 1 dargestellten Ablaufdiagramms erfolgt im Rahmen einer Verifizierung der Konfiguration des Getriebes bzw. einer Funktionsfähigkeitsüberprüfung abschließend ein einen Abgleich der Gehäusebohrungen oder -öffnungen mit zulässigen Anschlussbereichen der Maschine.

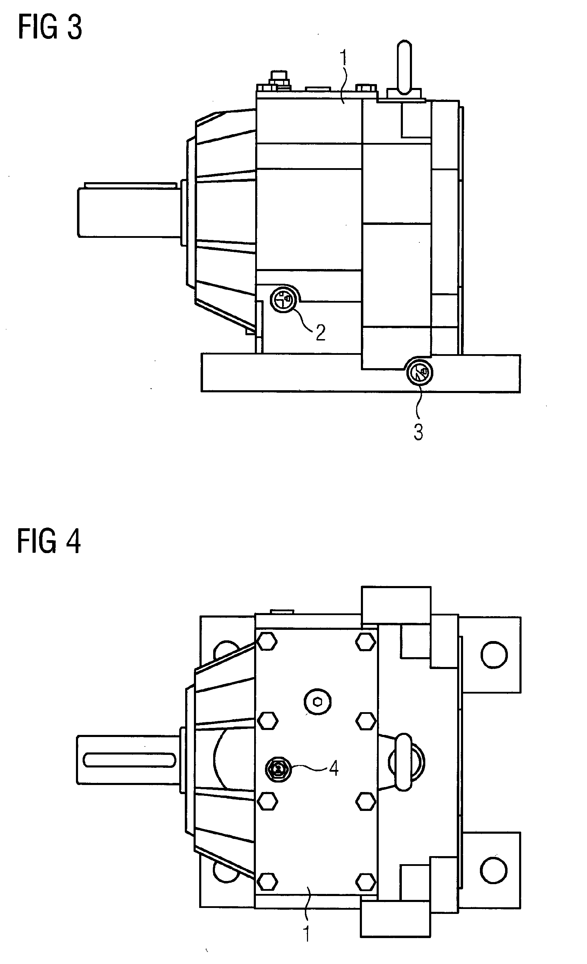

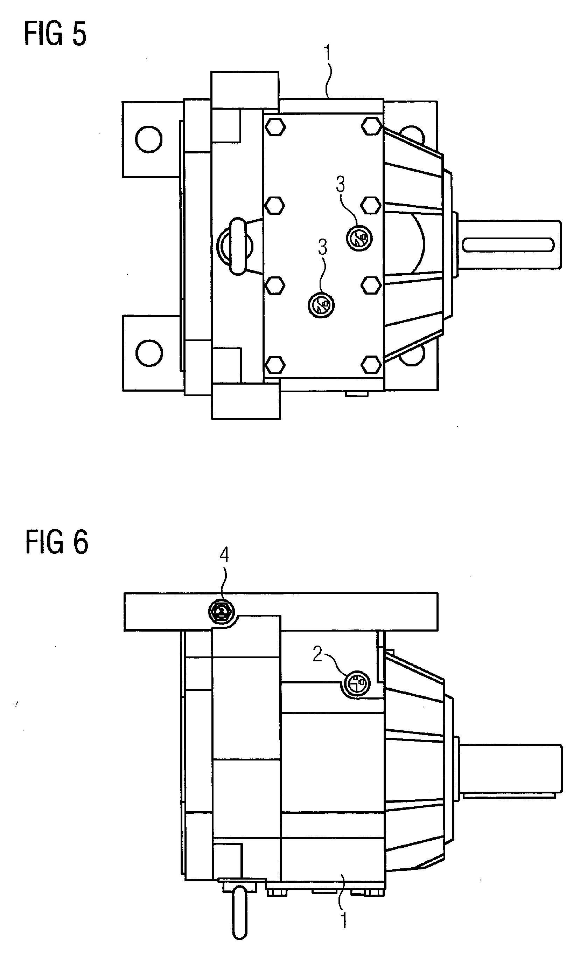

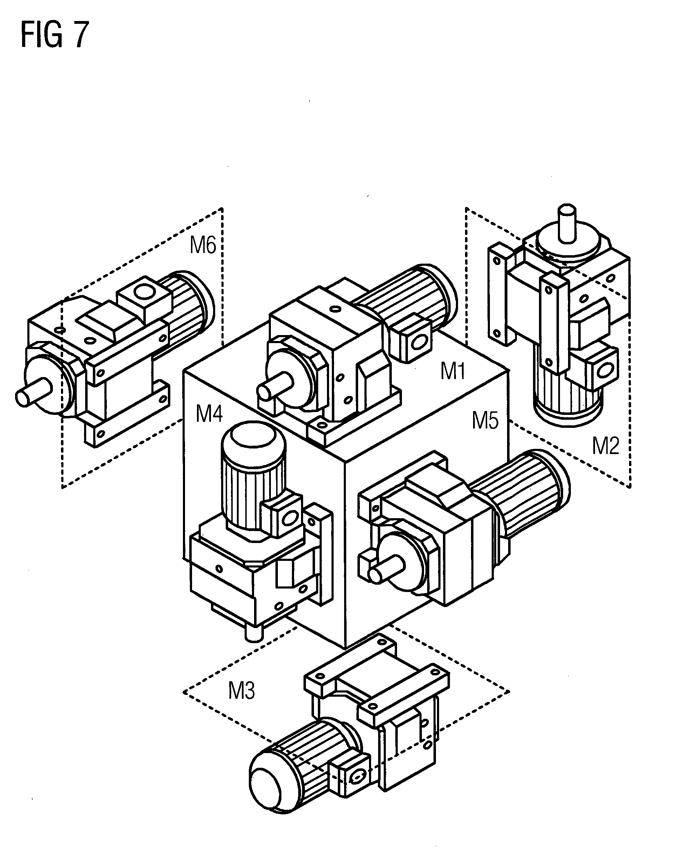

Entsprechend Figur 3-6 visualisieren die Piktogramme 2-4 jeweils eine der ausgewählten Einbaulage zugeordnete Funktion der Gehäusebohrungen oder -öffnungen des Getriebes 1. Bei der in den Figuren 3 und 4 dargestellten ersten Einbaulage ist ein beispielhaftes Getriebe auf einer horizontalen Fläche befestigt. Dagegen ist das Getriebe bei der in den Figuren 5 und 6 dargestellten zweiten Einbaulage unter einer horizontalen Fläche befestigt. Entsprechend der in Figur 7 dargestellten Übersicht mit insgesamt 6 Einbaulagen M1-M6 eines ein Getriebe umfassenden Getriebemotors kann der Getriebemotor grundsätzlich jeweils an einer Seitenfläche eines virtuellen Würfels befestigt sein. Jeder Seitenfläche ist dabei eine Einbaulage M1-M6 zugeordnet.

In den Figuren 3-6 symbolisiert ein erstes Piktogramm 2 eine Schmierstoffstandskontrollöffnung, ein zweites Piktogramm 3 eine Schmierstoffablassöffnung und eine drittes Piktogramm 4 eine Entlüftungsöffnung. Entsprechend der in den Figuren 3 und 4 dargestellten ersten Einbaulage sind Schmierstoffstandskontrollöffnung und Schmierstoffablassöffnung an derselben Gehäuseseite angeordnet, während die Entlüftungsöffnung an einer benachbarten Gehäuseseite vorgesehen ist. Bei der in den Figuren 5 und 6 dargestellten zweiten Einbaulage sind Entlüftungsöffnung und Schmierstoffstandskontrollöffnung an derselben Gehäuseseite angeordnet, während an einer benachbarten Gehäuseseite zwei Schmierstoffablassöffnungen vorgesehen sind.

Das vorangehend beschriebene Verfahren wird bevorzugt durch ein Steuerungsprogramm 216 implementiert, das in einen Arbeitsspeicher 212 der Server-Rechnereinheit 201 ladbar ist und zumindest einen durch einen Prozessor 211 der Server-Rechnereinheit 201 verarbeitbaren Codeabschnitt aufweist. Bei Ausführung dieses Codeabschnitts werden die Schritte 101-109 des in Figur 1 dargestellten Ablaufdiagramms ausgeführt, wenn das Steuerungsprogramm 216 in der Server-Rechnereinheit 201 abläuft. Darüber hinaus umfasst die Server-Rechnereinheit 201 eine mit der graphischen Benutzerschnittstelle 219 gekoppelte Eingabe-Ausgabe-Einheit 213 sowie ein Bus-System 214, auf das Prozessor 211, Arbeitsspeicher 212 und Eingabe-Ausgabe-Einheit 213 zugreifen. Das Steuerungsprogramm 216 und die Steuerungsdatei 217 sind persistent auf einer Festplatte 215 der Server-Rechnereinheit 201 gespeichert. Umfangreiche Kataloge mit Getrieben können auch in einer eigenen Datenbank 218 gespeichert sein, die der Server-Rechnereinheit 201 zugeordnet ist.

Die Client-Rechnereinheit 202 umfasst ebenfalls einen Prozessor 221, einen Arbeitsspeicher 222, eine Eingabe-Ausgabe-Einheit 223, ein Bus-System 224 sowie eine Festplatte 225. Auf der Festplatte 225 ist ein Browser-Programm 226 zur Darstellung durch die Server-Rechnereinheit 201 über das Kommunikationsnetz 203 bereitgestellter Kataloginhalte 204 sowie eine benutzerspezifische Steuerungsdatei 227 mit eine Konfiguration der Maschine darstellenden Objektdaten gespeichert. Zur Steuerung von durch die Server-Rechnereinheit 201 bereitgestellten Kataloginhalten 204 übermittelt die Client-Rechnereinheit 202 entsprechende Steuerungsbefehle 205 über das Kommunikationsnetz 203 an die Server-Rechnereinheit 201. Außerdem kann die benutzerspezifische Steuerungsdatei 227 über das Kommunikationsnetz 203 gemeinsam mit der Steuerungsdatei 217 in die Server-Rechnereinheit 201 als Konfigurations- bzw. Funktionsüberprüfungseinheit geladen werden.

Die Anwendung der vorliegenden Erfindung ist nicht auf das beschriebene Ausführungsbeispiel beschränkt.

## Patentansprüche

1. Verfahren zur Konfiguration und/oder Funktionsfähigkeitsprüfung einer ein Getriebe umfassenden Maschine, bei dem
- in einer Steuerungsdatei eine dreidimensionale Abbildung eines in eine Maschine einzubauenden Getriebes gespeichert wird, wobei der Abbildung in der Steuerungsdatei Metadaten zugeordnet sind, die einbaulageabhängige Funktionen von einem Schmierstoffversorgungssystem des Getriebes zugeordneten Gehäusebohrungen oder -öffnungen kennzeichnen,
- die Steuerungsdatei in eine rechnerbasierte Konfigurations- und/oder Funktionsüberprüfungseinheit, der eine graphische Benutzerschnittstelle zugeordnet ist, geladen wird,
- ein von der geladenen Steuerungsdatei umfasstes Getriebe an der graphischen Benutzerschnittstelle hinsichtlich seiner durch seine Position und/oder Orientierung vorgegebenen Einbaulage konfigurierbar dargestellt wird,
- auf eine Benutzereingabe einer ausgewählten Einbaulage das von der Steuerungsdatei umfasste Getriebe an der graphischen Benutzerschnittstelle mit Piktogrammen an den Gehäusebohrungen oder -öffnungen für einen Abgleich mit zulässigen Anschlussbereichen der Maschine dargestellt wird, wobei die Piktogramme jeweils eine der ausgewählten Einbaulage zugeordnete Funktion der Gehäusebohrungen oder -öffnungen visualisieren.

2. Verfahren nach Anspruch 1,
bei dem die dreidimensionale Abbildung des Getriebes als Objektdaten in der Steuerungsdatei gespeichert ist, und bei dem die Steuerungsdatei gemeinsam mit eine Konfiguration der Maschine darstellenden Objektdaten in die Konfigurations-und/oder Funktionsüberprüfungseinheit geladen und an der graphischen Benutzerschnittstelle dargestellt wird.

3. Verfahren nach einem der Ansprüche 1 oder 2,
bei dem die einbaulageabhängigen Funktionen der dem Schmierstoffversorgungssystem des Getriebes zugeordneten Gehäusebohrungen oder -öffnungen Entlüftung, Schmierstoffablass und Schmierstoffstandskontrolle sind.

4. Verfahren nach Anspruch 3,
bei dem die einbaulageabhängige Funktionen visualisierenden Piktogramme an der graphischen Benutzerschnittstelle auf Verschlussschrauben der Gehäusebohrungen oder -öffnungen angeordnet dargestellt werden.

5. Verfahren nach Anspruch 3,
bei dem die einbaulageabhängige Funktionen visualisierenden Piktogramme an der graphischen Benutzerschnittstelle neben Verschlussschrauben der Gehäusebohrungen oder -öffnungen angeordnet dargestellt werden.

6. Verfahren nach einem der Ansprüche 1 bis 5,
bei dem die Konfigurations- und/oder Funktionsüberprüfungseinheit einer Server-Rechnereinheit zugeordnet ist, und bei dem die graphische Benutzerschnittstelle einer Client-Rechnereinheit zugeordnet ist, wobei Server-Rechnereinheit und Client-Rechnereinheit über ein Kommunikationsnetz miteinander verbunden sind.

7. Steuerungsprogramm, das in einen Arbeitsspeicher einer Rechnereinheit ladbar ist und zumindest einen durch einen Prozessor verarbeitbaren Codeabschnitt aufweist, bei dessen Ausführung
- in einer Steuerungsdatei eine dreidimensionale Abbildung eines in eine Maschine einzubauenden Getriebes gespeichert wird, wobei der Abbildung in der Steuerungsdatei Metadaten zugeordnet sind, die einbaulageabhängige Funktionen von einem Schmierstoffversorgungssystem des Getriebes zugeordneten Gehäusebohrungen oder -öffnungen kennzeichnen,
- die Steuerungsdatei in eine rechnerbasierte Konfigurations- und/oder Funktionsüberprüfungseinheit, der eine graphische Benutzerschnittstelle zugeordnet ist, geladen wird,
- ein von der geladenen Steuerungsdatei umfasstes Getriebe an der graphischen Benutzerschnittstelle hinsichtlich seiner durch seine Position und/oder Orientierung vorgegebenen Einbaulage konfigurierbar dargestellt wird,
- auf eine Benutzereingabe einer ausgewählten Einbaulage das von der Steuerungsdatei umfasste Getriebe an der graphischen Benutzerschnittstelle mit Piktogrammen an den Gehäusebohrungen oder -öffnungen für einen Abgleich mit zulässigen Anschlussbereichen der Maschine dargestellt wird, wobei die Piktogramme jeweils eine der ausgewählten Einbaulage zugeordnete Funktion der Gehäusebohrungen oder -öffnungen visualisieren,
wenn das Steuerungsprogramm in der Rechnereinheit abläuft.

## Claims

1. Method for configuration and/or functional capability testing of a machine including a transmission, in which
- a three-dimensional map of a transmission to be installed in the machine is stored in a control file, wherein the map in the control file is assigned metadata which identifies installation-location-dependent functions of housing holes or openings assigned to a lubrication supply system of the transmission,
- the control file is loaded into a computer-based configuration and/or functional capability testing unit, to which a graphical user interface is assigned,
- a transmission covered by the loaded control file is displayed at the graphical user interface configurable in respect of its installation location predetermined by its position and/or orientation,
- in response to a user entry of a selected installation location, the transmission covered by the control file is displayed at the graphical user interface with pictograms at the housing holes or openings, for reconciliation with the permissible connection areas of the machine, wherein the pictograms each visualise a function of the housing holes or openings assigned to the selected installation location.

2. Method according to claim 1,
in which the three-dimensional map of the transmission is stored as object data in the control file, and in which the control file is loaded, together with the object data representing a configuration of the machine, into the configuration and/or functional capability testing unit and displayed at the graphical user interface.

3. Method according to one of claims 1 or 2, in which the installation-location-dependent functions of the housing holes or openings assigned to the lubrication supply system of the transmission are ventilation, lubricant draining and lubricant level control.

4. Method according to claim 3,
in which the pictograms visualising installation-location-dependent functions are displayed at the graphical user interface arranged on screw closures of the housing holes or openings.

5. Method according to claim 3,
in which the pictograms visualising installation-location-dependent functions are displayed at the graphical user interface arranged next to screw closures of the housing holes or openings.

6. Method according to one of claims 1 to 5,
in which the configuration and/or functional capability testing unit is assigned to a server processor unit, and in which the graphical user interface is assigned to a client processor unit, wherein server processor unit and client processor unit are connected to one another via a communication network.

7. Control program which is able to be loaded into a working memory of a computer unit and has at least one code section able to be processed by a processor, on execution of which
- a three-dimensional map of a transmission to be installed in a machine is stored in a control file, wherein the map in the control file is assigned metadata which identifies installation-location-dependent functions of housing holes or openings assigned to a lubrication supply system of the transmission,
- the control file is loaded into a computer-based configuration and/or functional capability testing unit, to which a graphical user interface is assigned,
- a transmission covered by the loaded control file is displayed at the graphical user interface configurable in respect of its installation location predetermined by its position and/or orientation,
- in response to a user entry of a selected installation location, the transmission covered by the control file is displayed at the graphical user interface with pictograms at the housing holes or openings for reconciliation with permissible connection areas of the machine, wherein the pictograms each visualise a function of the housing holes or openings assigned to the selected installation location when the control program executes in the computer unit.

## Revendications

1. Procédé de configuration et/ou de contrôle de la capacité fonctionnelle d'une machine comprenant une transmission, dans lequel
- on mémorise, dans un fichier de commande, une reproduction en trois dimensions d'une transmission à incorporer dans une machine en associant à la reproduction, dans le fichier de commande, des métadonnées, qui caractérisent des trous ou des ouvertures d'enveloppe associés à des fonctions, qui dépendent de la position de montage d'un système d'alimentation en lubrifiant de la transmission,
- on charge le fichier de commande dans une unité de configuration et/ou de contrôle de fonctions à base d'ordinateur, unité à laquelle est associée une interface utilisateur graphique,
- on représente de manière configurable une transmission, comprise par le fichier de commande chargé, sur l'interface utilisateur graphique en ce qui concerne son emplacement de montage prescrit par sa position et/ou son orientation,
- sur une entrée utilisateur d'un emplacement de montage sélectionné, on représente la transmission, comprise par le fichier de commande, sur l'interface utilisateur graphique par des pictogrammes sur les trous ou ouvertures de l'enveloppe pour un alignement avec des zones de raccordement admissibles de la machine, les pictogrammes visualisant respectivement une fonction des trous ou des ouvertures de l'enveloppe associée à l'emplacement de montage sélectionné.

2. Procédé suivant la revendication 1,
dans lequel on mémorise la reproduction en trois dimensions de la transmission comme données objet dans le fichier de commande et dans lequel on charge dans l'unité de configuration et/ou de contrôle fonctionnel le fichier de commande conjointement avec des données objet représentant une configuration de la machine et on le représente sur l'interface utilisateur graphique.

3. Procédé suivant l'une des revendications 1 ou 2,
dans lequel les fonctions qui dépendent de l'emplacement de montage des trous ou ouvertures de l'enveloppe associés au système d'alimentation en carburant de la transmission sont une mise à l'atmosphère, une évacuation de lubrifiant et un contrôle de l'état du lubrifiant.

4. Procédé suivant la revendication 3,
dans lequel on représente les pictogrammes visualisant des fonctions, qui dépendent de l'emplacement de montage, sur l'interface utilisateur graphique disposés sur des vis de fermeture des trous ou ouvertures de l'enveloppe.

5. Procédé suivant la revendication 3,
dans lequel on représente les pictogrammes visualisant des fonctions, qui dépendent de l'emplacement de montage, sur l'interface utilisateur graphique disposés à côté de vis de fermeture des trous ou ouvertures de l'enveloppe.

6. Procédé suivant l'une des revendications 1 à 5,
dans lequel l'unité de configuration et/ou de contrôle fonctionnel est associée à une unité informatique serveur et dans lequel l'interface utilisateur graphique est associée à une unité informatique client, l'unité informatique serveur et l'unité informatique client étant reliées entre elles par un réseau de communication.

7. Programme de commande, qui peut être chargé dans une mémoire de travail d'une unité d'ordinateur et qui a au moins une partie de code pouvant être traitée par un processeur, dans l'exécution duquel
- on mémorise, dans un fichier de commande, une reproduction en trois dimensions d'une transmission à incorporer dans une machine en associant à la reproduction, dans le fichier de commande, des métadonnées, qui caractérisent des trous ou des ouvertures d'enveloppe associés à des fonctions, qui dépendent de la position de montage d'un système d'alimentation en lubrifiant de la transmission,
- on charge le fichier de commande dans une unité de configuration et/ou de contrôle de fonctions à base d'ordinateur, unité à laquelle est associée une interface utilisateur graphique,
- on représente de manière configurable une transmission, comprise par le fichier de commande chargé, sur l'interface utilisateur graphique en ce qui concerne son emplacement de montage prescrit par sa position et/ou son orientation,
- sur une entrée utilisateur d'un emplacement de montage sélectionné, on représente la transmission, comprise par le fichier de commande, sur l'interface utilisateur graphique par des pictogrammes sur les trous ou ouvertures de l'enveloppe pour un alignement avec des zones de raccordement admissibles de la machine, les pictogrammes visualisant respectivement une fonction des trous ou des ouvertures de l'enveloppe associée à l'emplacement de montage sélectionné.
lorsque le programme de commande se déroule dans l'unité d'ordinateur.
